# EUROPÄISCHE PATENTSCHRIFT

(11) **EP 2 395 266 B1**
(45) Veröffentlichungstag und Bekanntmachung des Hinweises auf die Patenterteilung: **30.05.2012**
(21) Anmeldenummer: 10005873.4
(22) Anmeldetag: 08.06.2010
(51) Int. Cl.: F16J 15/06, F16J 15/10, B22D 41/50

(54) **Hochtemperatur-Dichtung**
High temperature gasket
Joint haute température

(43) Veröffentlichungstag der Anmeldung: 14.12.2011
(73) Patentinhaber: Refractory Intellectual Property GmbH & Co. KG, 1100 Wien (AT)
(72) Erfinder: Seitz, Patrick Dipl.-Ing., 8793 St. Peter-Freienstein (AT); Fluch, Bernhard Ing., 2500 Baden (AT); Pischek, Stefan Dipl.-Ing., 8682 Hönigsberg (AT); Bugajski, Margareta Dr., 8700 Leoben (AT)
(74) Vertreter: Becker, Thomas

(56) Entgegenhaltungen:
- EP-A1- 0 759 415
- DE-A1-102005 011 522
- DE-A1-102007 037 873
- DE-C1- 19 509 969

## Beschreibung

Die Erfindung betrifft eine Dichtung für Hochtemperaturanwendungen.

Im Besonderen ist der Erfindungsgedanke auf eine Dichtung und ein Dichtungsmaterial gerichtet, welches zur Dichtung/Abdichtung feuerfester keramischer Bauteile oder als Dichtung/Abdichtung zwischen feuerfesten keramischen Bauteilen eingesetzt werden kann.

Ein solches Dichtungsmaterial muss verschiedene Aufgaben erfüllen: es muss zum einen eine gewisse Verformbarkeit zulassen, um beispielsweise thermische Dehnungen und Kontraktionen benachbarter, insbesondere feuerfester Bauteile zu kompensieren, ohne die Dichtungsfunktion zu verlieren. Dies gilt für Anwendungen bei konstanter Betriebstemperatur ebenso wie für Anwendungen, bei denen es zu Temperaturwechseln kommt. Das Dichtungsmaterial muss darüber hinaus zumindest über eine gewisse Zeit formbeständig sein und selbst eine gewisse Feuerfestigkeit aufweisen. Es soll vorzugsweise austauschbar/erneuerbar sein.

Diese Forderungen widersprechen sich aus technischer Sicht zumindest teilweise. Insoweit ist immer wieder versucht worden, einen Kompromiss zwischen einer Verformbarkeit einerseits und einer Temperaturbeständigkeit andererseits zu finden.

Aus der Praxis ist es bekannt, feuerfeste keramische Mörtel (Betone) als Dichtungsmaterial zu verwenden. Diese verspröden jedoch mit der Zeit und unterliegen einem erheblichen Verschleiß. Ein weiterer Nachteil besteht darin, dass der Dichtungsmörtel am benachbarten feuerfesten Bauteil anhaftet und/oder mit diesem versintert. Hierdurch wird die Demontage und der Wechsel von Bauteil und Dichtung erschwert.

Ebenfalls aus der Praxis sind Dichtungen aus Glasfasern, Gesteinsfasern oder keramischen Fasern bekannt, wobei die Fasern mit einem Bindemittel fixiert werden, welches häufig nicht temperaturbeständig ist, so dass die Dichtungen ihre Formbeständigkeit insbesondere bei höheren Temperaturen verlieren.

Die DE 10 2007 037 873 A1 beschreibt eine Dichtung aus einer stranggepressten keramischen Masse und einem C-Träger mit 15-45 M.-% Kohlenstoff, wobei die Dichtung in einer Kohlenstoff-Umhüllung konfektioniert ist.

Aufgabe der Erfindung ist es demnach, eine Dichtung für Hochtemperaturanwendungen bereitzustellen, welches die beschriebenen Nachteile des Standes der Technik vermeidet.

Dem Erfindungsgegenstand liegen folgende Überlegungen zugrunde:

Es hat große anwendungstechnische Vorteile, wenn die Dichtung "ready to use" bereitgestellt wird. Anders ausgedrückt: Die Dichtungsmasse sollte so vorbereitet sein, dass sie insbesondere ohne weitere Aufbereitung/Behandlung eingesetzt werden kann. Dazu soll die Dichtung eine Verformbarkeit in dem Sinne aufweisen, dass sie sich während des Einbaus der Form korrespondierender Bauteile möglichst vollständig angleicht. Anders ausgedrückt: Die Dichtung soll sich so verformen lassen, dass sie optimiert ihre Dichtfunktion erfüllen kann. Insoweit ist die Dichtungsmasse beispielsweise feucht konfektioniert und/oder in einer feuchtigkeitsdichten Umhüllung konfektioniert. Die Feuchtigkeit kann Wasser sein, welches zum Anmischen der Masse benutzt wurde, ein flüssiges Bindemittel, ein flüssiges Additiv oder dergleichen. Die Feuchtigkeit kann auch Kristallwasser aus den refraktären Komponenten der Masse sein, das unter Wärme freigesetzt wird. Die Umhüllung verhindert, dass Luft an die Dichtungsmasse kommt beziehungsweise verhindert, dass die feuchte keramische Masse austrocknet, erhärtet oder versprödet. Über die Art und Menge der Feuchtigkeit kann die Verformbarkeit anwendungsspezifisch eingestellt werden.

Die Geometrie der Dichtung und die Menge der Dichtungsmasse lassen sich für jeden Anwendungsfall exakt einstellen. Damit wird beispielsweise eine definierte Fugenstärke zwischen zwei Bauteilen möglich. Zur Verfüllung der Fugen sind keine Spezialwerkzeuge notwendig.

Erfindungsgemäß hat die Umhüllung eine weitere wichtige Aufgabe, nämlich sich bei der Anwendung (unter Temperaturlast) zumindest teilweise zu zersetzen, wobei der Zersetzungsrückstand, insbesondere Kohlenstoff, ein Trennmittel ausbildet, welches ein unerwünscht starkes Anhaften der Dichtungsmasse am korrespondierenden Bauteil verhindert oder zumindest stark reduziert. Ebenso wird ein unerwünschtes Versintern zwischen Dichtungsmasse und Bauteil durch das Trennmittel (die Trennschicht) verhindert. Unabhängig davon kann sich die Dichtungsmasse nach Aufbrechen der Umhüllung in gewünschter Weise verformen, um eine Abdichtung an einem feuerfesten keramischen Bauteil oder zwischen einem solchen Bauteil und einem weiteren Bauteil zu bilden. Im Oberflächenbereich des Dichtungsmaterials herrschen bei einer typischen Anwendung zwischen feuerfesten keramischen Formteilen eines metallurgischen Schmelzgefäßes bei der Stahlproduktion Temperaturen zwischen 1.500 und 1.700° C. Je nach Abstand zur Stahlschmelze verringern sich die Temperaturen, denen das Dichtungsmaterial ausgesetzt ist, auf Werte bis 200° C. Die Dichtung kann trotz des großen Temperaturintervalls ihre Dichtfunktion uneingeschränkt erfüllen.

Die Hochtemperatur-Dichtung ist demnach wie folgt aufgebaut: Sie umfasst eine keramische refraktäre Dichtmasse und eine die refraktäre Dichtmasse umgebende Umhüllung, wobei die Umhüllung sich bei Temperaturen zwischen >50 und <2000 Grad Celsius zersetzt und dabei im Oberflächenbereich der keramischen Dichtmasse eine Kohlenstoff-Schicht ausbildet.

Die Kohlenstoff-Schicht kann aus Teilflächen bestehen, zum Beispiel, wenn nur Teile der Umhüllung aus einem Material bestehen, das die gewünschte Kohlenstoff-Trennschicht bildet. Je nach Art und Masse der Umhüllung kann die Trennschicht dicker oder dünner ausgebildet werden. Dies kann für jeden Anwendungsfall ausgewählt werden.

Um die Dichtung an einem zugehörigen Bauteil, beispielsweise einem feuerfesten keramischen Bauteil wie einer Hülse, zu platzieren, ist es vorteilhaft, die Dichtung aufzukleben. Dazu weist die Umhüllung außenseitig zumindest partiell Klebestellen auf, die von einem Klebstoff gebildet werden, der ebenfalls Kohlenstoff enthält. Bei der Anwendung (zum Beispiel, wenn eine Stahlschmelze durch die Hülse strömt), also nach einer deutlichen Temperaturerhöhung gegenüber Raumtemperatur, wird auch der Klebstoff zumindest teilweise zerstört (die Klebefunktion ist dann auch nicht mehr relevant, weil die Dichtung vorher platziert wurde) und setzt zusätzliches Trennmittel wie Kohlenstoff frei, der sich ebenfalls im Oberflächenbereich des Dichtungsmaterials ansammelt und ein unerwünschtes Versintern von Bauteil und Dichtung verhindert.

Die Klebestellen können von einem doppelseitigen Klebestreifen gebildet werden, der auf der Außenseite eine lösbare Schutzfolie aufweist. Solche Klebestreifen können auf die Umhüllung leicht aufgeklebt werden.

Ein geeignetes Umhüllungsmaterial sind Kunststoffe, beispielsweise aus der Gruppe Polyvinylchlorid (PVC), Polyurethan (PU), Polyethylen (PE), Polypropylen (PP), Polystyrol, Polycarbonat, Polyester, Polyactid, Polyethylenterphtalat (PET), Cellulosehydrat, Celluloseacetat, Polyacrylat, Kautschuk, Gummi, Stärkeblend, oder dergleichen. Die Umhüllung kann ganz oder teilweise aus Kunststoff bestehen.

Die Umhüllung kann von einer ein- oder mehrschichtigen Folie gebildet werden. Dabei können einzelne oder alle Schichten aus Kunststoff bestehen. Verbundmaterialien unter Einsatz von weiteren Materialien (neben Kunststoffen) wie Papier (einschließlich beschichteter, imprägnierter Papiere) sind möglich. Die Form der Umhüllung richtet sich nach dem jeweiligen Anwendungsfall. Beispiele sind: Kissen, Manschette, Schal, Teller, Rohr, Trichter, Ring.

Soll zum Beispiel eine zylindrische Umfangsfläche eines feuerfesten keramischen Rohres gegenüber Bauteilen abgedichtet werden, in denen dieses Rohr angeordnet ist oder welche dieses Rohr umgeben, so kann die Dichtung in Form einer zylinderförmigen Manschette gestaltet werden. Die Manschette selbst kann doppelwandig sein, wobei zwischen einer Innen- und Außenhülle das Dichtungsmaterial beispielsweise aus einer refraktären Komponente und einer SiO₂-hältigen Komponente, in viskoser Form angeordnet ist. Die Manschette lässt sich innerhalb gewisser Grenzen verformen und passend auf das Rohr aufsetzen.

Analog können Dichtungsbereiche von Schieberplatten, feuerfesten keramischen Ausgüssen, Gasspülsteinen etc. abgedichtet werden.

Eine beispielhafte Zusammensetzung für die Dichtungsmasse umfasst (alle Angaben in Gewichtsteilen):

| | | |
|---|---|---|
| Tabulartonerde | (<0,3mm): | 34 |
| Korund | (<0,2mm): | 38 |
| Chromoxid | (<0,2mm): | 4 |
| Ton: | | 6 |
| Bindemittel (Monoaluminiumphosphat): | | 13 |
| Wasser: | | 5 |
| Summe: | | 100 |

Die refraktäre Dichtmasse kann ebenfalls Kohlenstoff enthalten, jedoch als Versatzkomponente (batch component), insbesondere als elementarer Kohlenstoff, beispielsweise in Form von Russ, Graphit oder dergleichen.

Eine andere geeignete Dichtmasse ist wie folgt aufgebaut:
- 30 bis 70 Masse-% körnige refraktäre Komponente
- 70 bis 30 Masse-% SiO₂-hältige Komponente, die im Temperaturbereich bis etwa 100° C weitestgehend stabil ist und sich bei Temperaturen > 100° C unter Bildung von freiem SiO₂ zumindest teilweise zersetzt.

Die SiO₂-hältige Komponente kann ein Stoff aus der Gruppe: Silikonöl, Silikonharz, Silikonkautschuk sein.

Die SiO₂-hältige Komponente ist im Niedrigtemperaturbereich (beispielsweise bei Raumtemperatur, aber auch bei Temperaturen bis ca. 100° C) weitestgehend stabil. Sie gibt in Mischung mit der refraktären körnigen Komponente dem Dichtungsmaterial jedoch eine gewisse Verformbarkeit. Bei höheren Temperaturen zersetzt sich diese Komponente und bildet freies SiO₂ Das freie SiO₂ selbst hat wiederum feuerfeste Eigenschaften und unterstützt im Hochtemperaturbereich die Stabilität des Dichtungsmaterials.

Die SiO₂-hältige Komponente kann als Suspension in viskoser Form mit der körnigen refraktären Komponente gemischt werden. Dies ergibt eine gute Verformbarkeit des Dichtungsmaterials.

Im Hochtemperaturbereich geht die Verformbarkeit dann teilweise verloren, nämlich parallel zur Zersetzung der SiO₂-hältige Komponente, ohne jedoch die Dichtungsfunktion zu verlieren.

Die festen Bestandteile der refraktären Dichtungsmasse können in einer Kornfraktion d₅₀ < 250 µm vorliegen.

Die refraktäre Dichtungsmasse kann grundsätzlich aus jedem bei der Anwendung feuerfesten Werkstoff bestehen und enthält beispielsweise mindestens eine refraktäre Komponente aus der Gruppe: Silika, Alumosilikat, Magnesia, MA-Spinell, Doloma, Mullit, Tonerde, Korund, Bauxit, Zirkonoxid, Zirkonmullit, Zirkonkorund, Kohlenstoff, Chromoxid. Durch Zusätze wie Ton, flüssige Bindemittel und/oder Wasser können die spröden und prinzipiell nicht verformbaren refraktären Komponenten zu einer verformbaren Dichtungsmasse aufbereitet werden, wobei diese Verformbarkeit durch die feuchtigkeitsdichte Umhüllung solange erhalten bleibt, bis die Umhüllung zerstört wird.

Diese Zerstörung kann durch eine thermische Zersetzung des Kunststoffmaterials bei entsprechender Temperaturlast erfolgen. Der dabei gebildete Kohlenstoff-Rückstand bildet anschließend das gewünschte Trennmittel.

Weitere Merkmale der Erfindung ergeben sich aus den Merkmalen der Unteransprüche sowie den sonstigen Anmeldungsunterlagen.

Die Erfindung wird nachstehend anhand verschiedener Ausführungsbeispiele näher erläutert.

Dabei zeigen - jeweils in schematisierter Darstellung:
- Figur 1a:: eine Aufsicht auf eine erfindungsgemäße Dichtung in Form eines runden Kissens,
- Figur 1b:: eine Schnittdarstellung gemäß A - A zu Figur 1.
- Figur 2:: einen Längsschnitt durch einen Schieberverschluss an einer Gießpfanne.

In den Figuren sind gleiche oder gleich wirkende Bauteile teilweise mit gleichen Bezugszeichen dargestellt.

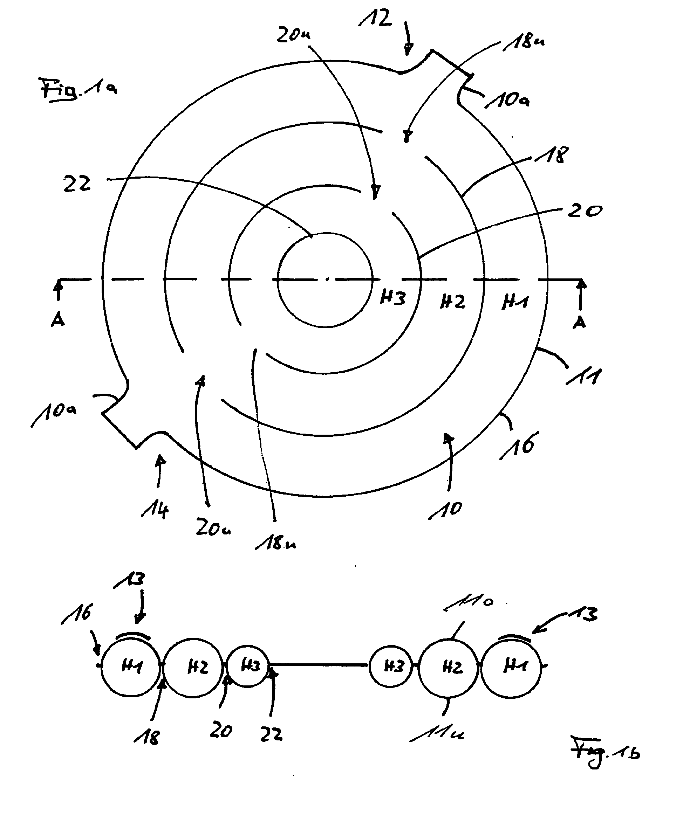

Figur 1a zeigt eine Dichtung 10 in Form eines in der Aufsicht etwa runden Kissens. Die Dichtung besteht aus einer Kunststofffolie 11 aus zwei Lagen 11u, 11o, wobei jede Lage etwa eine Kreisform aufweist. Umfangsseitig setzen sich die untere Folie 11u und die obere Folie 11o an zwei gegenüberliegenden Abschnitten (bei 12, 14) mit stutzenartigen Ansätzen 10a fort.

Die Folien 11u, 11o sind, ausgenommen im Bereich ihrer Ansätze 10a, umfangsseitig miteinander verschweißt, wodurch sich eine umlaufende Schweißnaht 16 ergibt, die nur im Bereich der Ansätze 10a unterbrochen ist. Auf diese Weise bilden die Ansätze 10a eine Eingangs- beziehungsweise Ausgangsöffnung zur Einfüllung eines Dichtungsmaterials in den Bereich zwischen den Folien 11u, 11o.

Im Wesentlichen konzentrisch zur Umfangs-Schweißnaht 16 verlaufen nach innen versetzt mit Abstand weitere Schweißnähte 18, 20, 22. Die Schweißnähte 18, 20 sind, wie die Umfangsschweißnaht 16, an zwei gegenüberliegenden Abschnitten unterbrochen (bei 18u, 20u), während die innere Schweißnaht 22 eine durchgehende Ringform aufweist.

Die Dichtung gemäß Figur 1 a ist mit einem Dichtungsmaterial gefüllt, welches aus einer wässrigen Suspension besteht, die 50 Masse-% einer feinteiligen Schamotte (d₅₀ <250 µm) und 50 Masse-% Silikonharz umfasst. Sie wurde bei geöffneten Ansätzen 10a im Bereich 12 eingefüllt und innerhalb der Ringräume zwischen den Schweißnähten 16, 18, 20, 22 verteilt, bis die in Figur 1b dargestellten, im Schnitt etwa kreisförmigen Hohlräume H1, H2 und H3 mehr oder weniger vollständig mit Dichtungsmaterial verfüllt waren. Anschließend wurden die Folien 11u, 11o im Bereich der Ansätze 10a miteinander verschweißt, um das Dichtungsmaterial vollständig zwischen den Folien 11u, 11o in der endgültigen Formgebung zu konfektionieren.

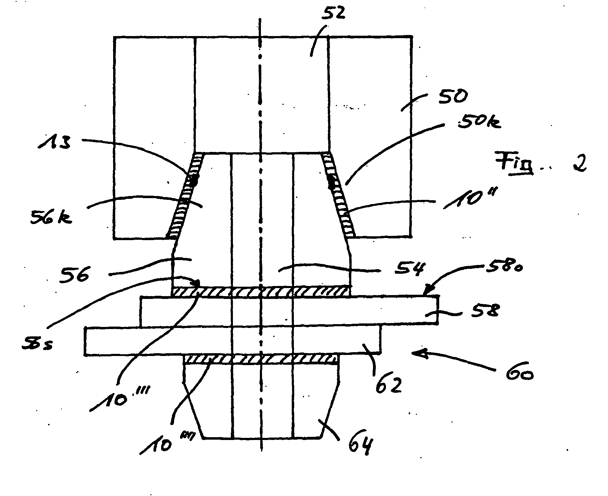

Der in Figur 2 dargestellte Ausgussbereich einer Gießpfanne umfasst unter anderem einen Lochstein (well block) 50 mit einer zentralen Durchgangsöffnung 52, an die sich ein Durchflusskanal 54 einer Hülse 56 anschließt, die mit ihrem konischen Abschnitt 56k gegen eine erfindungsgemäße Dichtung 10" und diese gegen einen korrespondierenden inneren konischen Abschnitt 50k des Lochsteins 50 anliegt.

Zwischen einer unteren Stirnfläche 56s der Hülse 56 und einer Oberseite 58o einer Schieberplatte 58 eines insgesamt mit 60 bezeichneten Schieberverschlusses liegt eine weitere erfindungsgemäße Dichtung 10"'.

Während die Dichtung 10" nach Figur 2 die Form einer Manschette aufweist, ist die Dichtung 10"' gemäß Figur 2 ähnlich der Dichtung 10 gemäß Figur 1 kissenartig gestaltet, hier allerdings ringförmig mit einer mittleren Öffnung, korrespondierend zur Durchgangsöffnung 54 der Hülse 56.

Eine korrespondierende Dichtung 10"" ist zwischen einer unteren Schieberplatte 62 und einer Auslaufhülse 64 platziert.

Die Dichtungen gemäß Figur 2 bestehen aus einer Dichtungsmasse auf Basis Tabulartonerde, Ton, Monoaluminiumphosphat, wie im allgemeinen Teil der Beschreibung dargestellt.

Bei allen Dichtungen ist die Dichtungsmasse in einer Umhüllung aus einer Kunststofffolie 11 konfektioniert, die weitestgehend feuchtigkeitsdicht ist. "Weitestgehend feuchtigkeitsdicht" bedeutet, dass bei ordnungsgemäßer Lagerung die Feuchtigkeit in der Dichtungsmasse über mehrere Wochen/Monate erhalten bleibt. Entsprechend können die Dichtungen als "ready to use"-Dichtungen beim Anwender auch mittelfristig und bei Bedarf - ohne weitere Maßnahmen - eingesetzt werden.

Sie werden dann auf die dargestellte Art und Weise an oder zwischen benachbarten feuerfesten Bauteilen platziert. Bei der Anwendung, also beispielsweise dann, wenn Stahl durch das benachbarte feuerfeste Bauteil fließt, erhöht sich zwangsläufig auch die Temperatur im Bereich der Dichtung wobei die Kunststoff-Umhüllung pyrolysiert und einen Kohlenstoff-Rückstand bildet, der sich im Oberflächenbereich des keramischen Dichtungsmaterials ansammelt und die Funktion eines Trennmittels zwischen Dichtungsmasse und benachbartem feuerfesten Bauteil beziehungsweise benachbartem metallischen Bauteil erfüllt.

Daraus folgt, dass beispielsweise die Dichtung 10" gemäß Figur 2 bei einem Wechsel der Hülse 56 leicht vom Lochstein 50 und der Hülse 56 gelöst werden kann, da die Dichtungsmasse nicht oder nur in geringem Umfang mit den benachbarten Feuerfestteilen versintert ist.

Um eine exakte Positionierung einer Dichtung an einem zugehörigen Bauteil sicherzustellen, ist auf der Umhüllung (Kunststofffolie 11) zumindest partiell eine Klebeschicht aufgebracht, wie in Figur 1b schematisch mit dem Bezugszeichen 13 dargestellt. Hierbei handelt es sich um ein doppelseitiges Klebeband, welches mit einer Seite auf der Kunststofffolie 11 und mit der anderen Seite an dem benachbarten Bauteil fixiert wird. Das Klebeband ist außen mit einer Abdeckfolie versehen, die abgezogen werden kann, bevor die Verklebung erfolgt.

In Figur 2 ist die Position eines analogen ringförmigen Klebebandes mit dem Bezugszeichen 13 ebenfalls schematisch für die Dichtung 10" dargestellt.

## Patentansprüche

1. Hochtemperatur-Dichtung mit folgenden Merkmalen:
1.1 einer keramischen refraktären Dichtmasse,
1.2 einer die refraktäre Dichtmasse umgebenden Umhüllung,
1.2.1 die Umhüllung zersetzt sich bei Temperaturen zwischen >50 und <2000 Grad Celsius und
1.2.2 bildet nach der Zersetzung im Oberflächenbereich der keramischen Dichtmasse eine Kohlenstoff-Schicht,
1.3 **dadurch gekennzeichnet, dass** die Umhüllung außenseitig zumindest partiell Klebestellen auf Basis eines Kohlenstoff-hältigen Klebstoffs aufweist.

2. Hochtemperatur-Dichtung nach Anspruch 1, deren Umhüllung feuchtigkeitsdicht ist.

3. Hochtemperatur-Dichtung nach Anspruch 1, deren Umhüllung aus mindestens einem Material aus der Gruppe: Silikonkautschuk, Silikongummi, Naturkautschuk, Polyurethan, Polyethylen, Polypropylen, Polycarbonate, Polyethylenterphtalat besteht.

4. Hochtemperatur-Dichtung nach Anspruch 1, deren Umhüllung mehrschichtig ist.

5. Hochtemperatur-Dichtung nach Anspruch 1, deren Klebestellen von einem mit einer lösbaren Schutzfolie abgedeckten Klebestreifen (13) gebildet werden.

6. Hochtemperatur-Dichtung nach Anspruch 1, deren refraktäre Dichtmasse wie folgt aufgebaut ist:
6.1 30 bis 70 Masse-% einer körnigen refraktären Komponente, und
6.2 70 bis 30 Masse-% einer SiO₂-hältigen Komponente, die im Temperaturbereich bis etwa 100° C weitestgehend stabil ist und sich bei Temperaturen > 100° C unter Bildung von freiem SiO₂ zumindest teilweise zersetzt.

7. Hochtemperatur-Dichtung nach Anspruch 6, dessen SiO₂-hältige Komponente ein Stoff aus der Gruppe: Silikonöl, Silikonharz, Silikonkautschuk ist.

8. Hochtemperatur-Dichtung nach Anspruch 1, bei der feste Bestandteile der refraktären Dichtmasse in einer Kornfraktion d₅₀ < 250 µm vorliegen.

9. Hochtemperatur-Dichtung nach Anspruch 1, deren refraktäre Dichtungsmasse mindestens eine refraktäre Komponente aus der Gruppe: Magnesia, Doloma, Tonerde, Bauxit, Zirkonoxid, Kohlenstoff, Chromoxid, Korund enthält.

10. Hochtemperatur-Dichtung nach Anspruch 1, deren Umhüllung eine der folgenden Formgebungen aufweist; Kissen, Manschette, Schal, Teller, Rohr, Trichter, Ring.

## Claims

1. High temperature sealing, including the following features:
1.1 a ceramic refractory sealing mass,
1.2 an envelope surrounding the said refractory sealing mass,
1.2.1 the envelope decomposes at temperatures between >50 and <2.000°C and
1.2.2 forms a carbon layer, after its decomposition, along the surface of the ceramic sealing mass,
**characterized in that**
1.3 the envelope provides at its outer surface at least partially adhesive areas based on a carbon-containing adhesive.

2. High temperature sealing according to claim 1, the envelope of which being fluid tight.

3. High temperature sealing according to claim 1, the envelope of which is made of at least one material of the group comprising: silicone caoutchouc, silicon rubber, natural rubber, polyurethane, polyethylene, polypropylene, polycarbonate, polyethylene terephtalate.

4. High temperature sealing according to claim 1, the envelope of which is multi-layered.

5. High temperature sealing according to claim 1, the adhesive areas of which are provided by an adhesive tape (13) with a detachable protective cover foil.

6. High temperature sealing according to claim 1, the refractory sealing mass being made of:
6.1 30 to 70 M.-% of a granular refractory component and
6.2 70 to 30 M.-% of an SiO₂ comprising component, which is mostly stable in a temperature range up to about 100°C and which disintegrates at least partially at temperatures >100°C while forming free SiO₂.

7. High temperature sealing according to claim 6, the SiO₂ comprising component of which being a material from the group: silicone oil, silicone resin, silicon rubber.

8. High temperature sealing according to claim 1, solid parts of the refractory sealing mass of which being present in a grain fraction d₅₀ < 250µm.

9. High temperature sealing according to claim 1, the refractory component of which comprises at least one refractory component of the group comprising: magnesia, doloma, alumina, bauxite, zirconia, carbon, chromium oxide, corundum.

10. High temperature sealing according to claim 1, the envelope of which has one of the following shapes: pillow, collar, scarf, plate, pipe, cone, ring.

## Revendications

1. Garniture d'étanchéité haute température, présentant les attributs suivants :
1.1 une masse d'étanchéité réfractaire céramique,
1.2 une enveloppe entourant la masse d'étanchéité réfractaire,
1.2.1 l'enveloppe se décompose à des températures comprises entre > 50 et < 2000 degrés Celsius et
1.2.2 forme après la décomposition, dans la zone superficielle de la masse d'étanchéité céramique une couche de carbone,
**caractérisée en ce que**
1.3 l'enveloppe comporte sur la face extérieure, au moins en partie des points de collage sur la base d'un adhésif contenant du carbone.

2. Garniture d'étanchéité haute température selon la revendication 1, dont l'enveloppe est étanche à l'humidité.

3. Garniture d'étanchéité haute température selon la revendication 1, dont l'enveloppe est constituée d'au moins un matériau compris dans le groupe : caoutchouc silicone, gomme de silicone, caoutchouc naturel, polyuréthane, polyéthylène, polypropylène, polycarbonate, polyéthylène téréphtalate.

4. Garniture d'étanchéité haute température selon la revendication 1, dont l'enveloppe est multicouche.

5. Garniture d'étanchéité haute température selon la revendication 1, dont les points de collage sont formés par un ruban adhésif (13) recouvert d'un film protecteur amovible.

6. Garniture d'étanchéité haute température selon la revendication 1, dont la masse d'étanchéité réfractaire présente la structure suivante :
6.1 de 30 à 70 % en masse d'un composant réfractaire granuleux et
6.2 de 70 à 30 % en masse d'un composant contenant du SiO₂, qui dans l'ordre de températures de jusqu'à environ 100 °C est amplement stable et qui se décompose au moins en partie à des températures > 100 °C en formant du SiO₂ libre.

7. Garniture d'étanchéité haute température selon la revendication 6, dont le composant contenant du SiO₂ est une matière du groupe comprenant : l'huile de silicone, la résine de silicone, le caoutchouc de silicone.

8. Garniture d'étanchéité haute température selon la revendication 1, dans laquelle des composants solides de la masse d'étanchéité réfractaire se présentent dans une fraction granulométrique d₅₀ < 250 µm.

9. Garniture d'étanchéité haute température selon la revendication 1, dont la masse d'étanchéité réfractaire contient au moins un composant réfractaire du groupe : magnésie, doloma, alumine, bauxite, oxyde de zirconium, carbone, oxyde de chrome, corindon.

10. Garniture d'étanchéité haute température selon la revendication 1 dont l'enveloppe présente la conformation suivante : coussin, manchette, écharpe, assiette, tube, entonnoir, bague.
